(19) Europäisches Patentamt
European Patent Office
Office européen des brevets

(11) **EP 3 949 199 B1**

(12) **EUROPEAN PATENT SPECIFICATION**

(45) Date of publication and mention of the grant of the patent:
**26.07.2023 Bulletin 2023/30**

(21) Application number: **20708083.9**

(22) Date of filing: **02.03.2020**

(51) International Patent Classification (IPC):
**H04L 1/18** (2023.01)   **H04L 1/20** (2006.01)

(52) Cooperative Patent Classification (CPC):
**H04L 1/1825; H04L 1/1854; H04L 1/206**

(86) International application number:
**PCT/EP2020/055420**

(87) International publication number:
**WO 2020/200603 (08.10.2020 Gazette 2020/41)**

(54) **METHODS PROVIDING ACK/NACK FEEDBACK BASED ON REFERENCE SIGNAL RECEIVED POWER AND RELATED WIRELESS DEVICES**

VERFAHREN ZUR BEREITSTELLUNG VON ACK/NACK-FEEDBACK AUF BASIS VON EMPFANGENER REFERENZSIGNALLEISTUNG UND ZUGEHÖRIGE DRAHTLOSE VORRICHTUNG

PROCÉDÉS FOURNISSANT UNE RÉTROACTION ACK/NACK SUR LA BASE D'UNE PUISSANCE DE SIGNAL DE RÉFÉRENCE REÇUE ET DISPOSITIFS SANS FIL ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2019 US 201962828322 P**

(43) Date of publication of application:
**09.02.2022 Bulletin 2022/06**

(73) Proprietor: **TELEFONAKTIEBOLAGET LM ERICSSON (PUBL)**
**164 83 Stockholm (SE)**

(72) Inventors:
• **ASHRAF, Shehzad Ali**
  **52070 Aachen (DE)**
• **DO, Hieu**
  **177 32 Järfälla (SE)**

(74) Representative: **Ericsson**
**Patent Development**
**Torshamnsgatan 21-23**
**164 80 Stockholm (SE)**

(56) References cited:
• QUALCOMM INCORPORATED: "QoS for NR V2X", 3GPP DRAFT; R2-1905196_WAS_3043_QOS_NR_V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Xi'an, China; 20190408 - 20190412 1 April 2019 (2019-04-01), XP051709665, Retrieved from the Internet: URL:http://www.3gpp.org/ftp/tsg%5Fran/WG2%5FRL2/TSGR2%5F105bis/Docs/R2%2D1905196%2Ez ip [retrieved on 2019-04-01]
• QUALCOMM INCORPORATED: "Physical layer procedures for sidelink", 3GPP DRAFT; R1-1905012_PHYSICAL LAYER PROCEDURES FOR SIDELINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xian, China; 20190408 - 20190412 30 March 2019 (2019-03-30), XP051691935, Retrieved from the Internet: URL:http://www.3gpp.org/ftp/tsg%5Fran/WG1%5FRL1/TSGR1%5F96b/Docs/R1%2D1905012%2Ezip [retrieved on 2019-03-30]

- ERICSSON: "On the use of communication range at access stratum", 3GPP DRAFT; R2-1904711 - ON THE USE OF COMMUNICATION RANGE AT ACCESS STRATUM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Xi'an, China; 20190408 - 20190412 29 March 2019 (2019-03-29), XP051693903, Retrieved from the Internet: URL:http://www.3gpp.org/ftp/tsg%5Fran/WG2%5FRL2/TSGR2%5F105bis/Docs/R2%2D1904711%2Ez ip [retrieved on 2019-03-29]
- KYOCERA: "SC-PTM feedback scheme for link adaptation and retransmission", 3GPP DRAFT; R2-166852_FEMTC_ENB-IOT_FB-LA-RETX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung, Taiwan; 20161010 - 20161014 9 October 2016 (2016-10-09), XP051151297, Retrieved from the Internet: URL:http://www.3gpp.org/ftp/Meetings_3GPP_SYNC/RAN2/Docs/ [retrieved on 2016-10-09]
- KYOCERA: "A Reliable Groupcast HARQ feedback scheme for NR V2X", 3GPP DRAFT; R1-1902132, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 14 February 2019 (2019-02-14), XP051599827, Retrieved from the Internet: URL:http://www.3gpp.org/ftp/tsg%5Fran/WG1%5FRL1/TSGR1%5F96/Docs/R1%2D1902132%2Ez ip [retrieved on 2019-02-14]
- ITRI: "Discussion on NR V2X Sidelink Physical Procedures", 3GPP DRAFT; R1-1905079, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xi'an, China; 20190408 - 20190412 1 April 2019 (2019-04-01), XP051707380, Retrieved from the Internet: URL:http://www.3gpp.org/ftp/tsg%5Fran/WG1%5FRL1/TSGR1%5F96b/Docs/R1%2D1905079%2Ezip [retrieved on 2019-04-01]

**Description**

TECHNICAL FIELD

The present disclosure relates generally to wireless communications, and more particularly, to methods providing wireless groupcast communications and related wireless devices.

BACKGROUND

LTE Vehicle-to-anything (V2X) communications are discussed below.

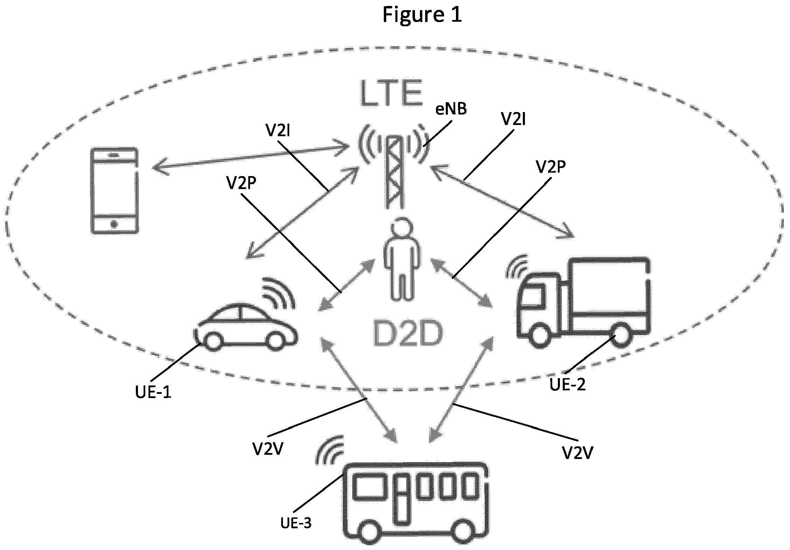

Long Term Evolution LTE V2X was first specified by 3GPP in Release 14 and was enhanced in Release 15. LTE V2X provides basic features and enhancements that allow for vehicular communications. One of the most relevant aspects is the introduction of direct vehicle-to-vehicle (V2V) communication functionalities. The specifications support other types of vehicle-to-anything (V2X) communications, including V2P (vehicle-to-pedestrian or pedestrian-to-vehicle), V2I (vehicle-to-infrastructure), etc., as shown in Figure 1.

Figure 1 illustrates V2X scenarios for an LTE-based Radio Access Network NW. As shown in Figure 1, V2I (vehicle-to-infrastructure) communications may be provided between a vehicle and the radio access network RAN (e.g., between V2X wireless device UE-1 and eNB or between V2X wireless device UE-2 and eNB), V2V (vehicle-to-vehicle) communications may be provided directly between different vehicles (e.g., between V2X wireless devices UE-1 and UE-3, or between V2X wireless devices UE-2 and UE-3) without communicating through the radio access network, and V2P (vehicle-to-pedestrian or pedestrian-to-vehicle) communications may be provided directly between a vehicle and a device held/carried by the pedestrian (e.g., a smartphone, a tablet computer, etc.). V2X communications are meant to include any/all of V2I, V2P, and V2V communications.

These direct communication functionalities are built upon LTE D2D (device-to-device), also known as ProSe (Proximity Services), as first specified in the Release 12 of LTE, and include many important enhancements targeting the specific characteristics of vehicular communications. For example, LTE V2X operation is possible with and without network coverage and with varying degrees of interaction between the V2X wireless devices UEs (user equipment) and the NW (network), including support for standalone, network-less operation.

LTE V2X mainly targets basic road safety use cases like forward collision warning, emergency braking, roadworks warning, etc. Vehicle V2X wireless device UEs supporting V2X applications can exchange their own status information such as position, speed and heading, with other nearby vehicles, infrastructure nodes and/or pedestrians. Types of messages sent by the vehicles include Co-operative Awareness Messages (CAMs) and Decentralized Environmental Notification Messages (DENMs), defined by ETSI (European Telecommunications Standards Institute), or Basic Safety Messages (BSMs), defined by the SAE (Society of the Automotive Engineers).

3GPP has started a new study item (SI) in August 2018 within the scope of Rel-16 to develop a new radio (NR) version of V2X communications. The NR V2X will mainly target advanced V2X services, which can be categorized into four use case groups: vehicles platooning, extended sensors, advanced driving and remote driving. The advanced V2X services may require enhanced NR systems and a new NR sidelink to meet stringent requirements in terms of latency and reliability. NR V2X system are also expected to have higher system capacity and better coverage and to allow for easy extension to support the future development of further advanced V2X services and other services.

Broadcast/multicast/unicast transmissions in V2X are discussed below.

Due to the nature of the basic road safety services, technical solutions for LTE V2X Rel-14/15 are designed mainly for broadcast transmissions. That means that the intended receiver of each message may be all V2X wireless devices UEs within a relevant distance from the transmitter. In physical layer broadcast communications, the transmitter, in fact, may not have the notion of intended receivers.

Given the targeted services of NR V2X, it is commonly recognized that groupcast/multicast and unicast transmissions are desired, in which the intended receiver of a message consists of only a subset of the vehicles in proximity to the transmitter (groupcast) or of a single vehicle (unicast). For example, in the platooning service there are certain messages that are only of interest to the members of the platoon, making the members of the platoon a natural groupcast. In another example, the see-through use case most likely involves only a pair of vehicles, for which unicast transmissions may naturally fit.

With such V2X groupcast messages, conventional acknowledgements (ACK/NACK) may consume increased radio resources.

In R2-1905196 "QoS for NR V2X" (3GPP TSG-RAN WG2 Meeting #105bis, 8-12, April 2019) QoS design issues for unicast, groupcast and broadcast are discussed, e.g. using of a "minimum communication range" parameter in a QoS profile as a criterion to decide whether the send HARQ feedback in AS layers for groupcast.

R1-1905012 "Physical layer procedures for side link" (3GPP TSG RAN WG1 Meeting #96bis, 8th - 12th April 2019) discusses distance based HARQ feedback operation for groupcast/multicast, e.g. to use TX-RX distance and/or RSRP in deciding whether to send HARQ feedback.

R2-1904711 "On the use of communication range at access stratum" (3GPP TSG-RAN WG2 #105bis, 8th - 12th April 2019) discusses how access stratum utilizes communication range parameter that associated with a V2X service and delivered from upper layers, e.g. that a TX UE may only consider HARQ feedbacks with energy of the associated PSFCH above a certain threshold.

R2-166852 "SC-PTM feedback scheme for link adaptation and retransmission" (3GPP TSG-RAN WG2 #95bis, October 10- 14,2016) discusses details and necessity of HARQ feedback for link adaptation and retransmission of SC-PTM. Further optimizations for HARQ feedback are discussed, e.g. whether NACK only feedback is beneficial to limit the number of HARQ feedbacks.

R1-I902132 "A Reliable Groupcast HARQ feedback scheme for NR V2X" (3GPP TSG.RAN WGI#96, Feb. 25th -Mar. 1st, 2019) discusses physical layer issues related to the support of sidelink Groupcast, e.g. HARQ-NACK feedback restriction based on configurable RSRP-threshold.

R1-1905079 "Discussion on NR V2X Sidelink Physical Procedures" (3GPP TSG RAN WG1 #96bis, 8th April - 12th April, 2019) discusses sidelink physical layer procedures, e.g. to use TX-RX distance and/or RSRP in deciding whether to send HARQ feedback for sidelink groupcast.

SUMMARY

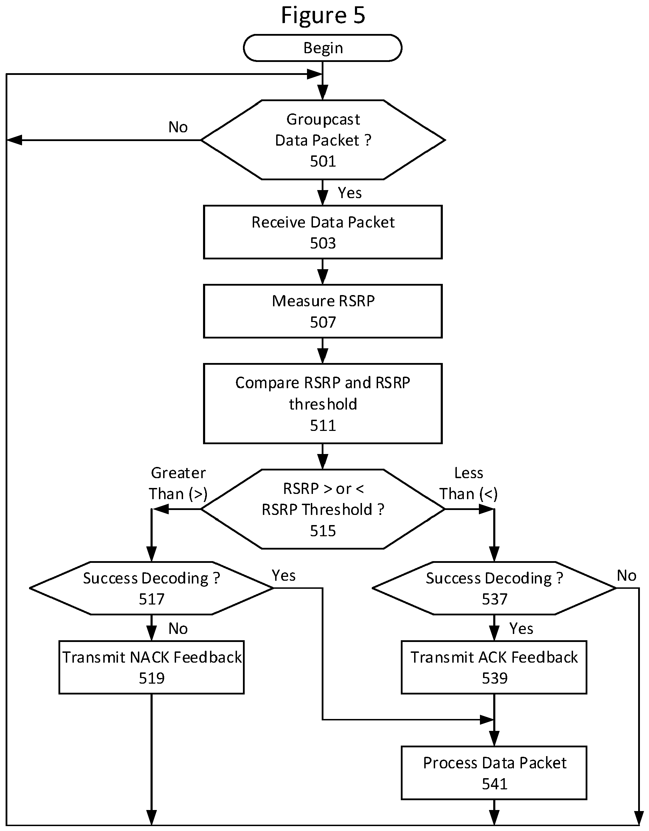

The invention is defined by the appended claims. The following embodiments of deciding not to send ACK or NACK based on RSRP thresholds as depicted in fig. 5 are used to explain the claimed invention but do not form part of it. Other embodiments discussed below are not embodiments of the claimed invention.

According to some embodiments, unnecessary ACK/NACK retransmissions may be reduced thereby reducing sidelink/network congestion.

BRIEF DESCRIPTION OF THE DRAWINGS

The accompanying drawings, which are included to provide a further understanding of the disclosure and are incorporated in a constitute a part of this application, illustrate certain nonlimiting embodiments of inventive concepts. In the drawings:

Figure 1 is a schematic diagram illustrating V2X (Vehicle-to-Anything) communication scenarios in an LTE/NR base network;
Figure 2 is a block diagram illustrating a wireless communication device UE according to some embodiments of inventive concepts;
Figure 3 is a block diagram illustrating a network node according to some embodiments of inventive concepts;
Figures 4 and 5 are flow charts illustrating operations of wireless devices (also referred to as wireless communication devices, UEs, etc.) according to some embodiments of inventive concepts;
Figure 6 illustrates CSI report transmission using PSSCH in accordance with some embodiments;
Figure 7 illustrates independent resource selections of CSI report and data in accordance with some embodiments; and
Figure 8 illustrates a slot structure containing SCSI-RS in accordance with some embodiments.

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the claims.

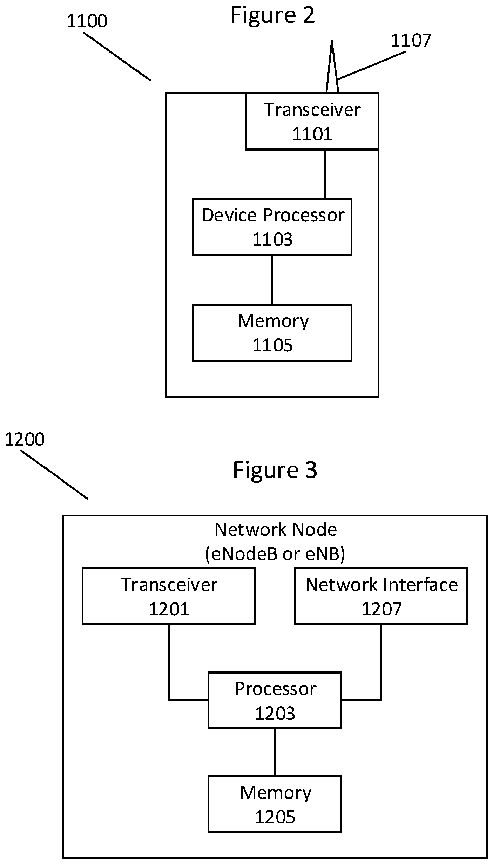

Figure 2 is a block diagram illustrating elements of a V2X wireless device UE 1100 (also referred to as a wireless communication device, a wireless terminal, a wireless communication terminal, user equipment, UE, or a user equipment node/terminal/device) configured to provide V2X sidelink communication according to embodiments of inventive concepts As shown, wireless communication device UE 1100 may include a transceiver circuit 1101 including a transmitter and a receiver configured to provide uplink and downlink radio communications with a base station of a radio access network, and to provide V2X sidelink communications (e.g., V2V and/or V2P communications) directly with other V2X wireless communication devices. Wireless communication device UE 1100 may also include a processor circuit 1103 coupled to the transceiver circuit, and a memory circuit 1105 coupled to the processor circuit. The memory circuit 1105 may include computer readable program code that when executed by the processor circuit 1103 causes the processor circuit to perform operations according to embodiments disclosed herein. According to other embodiments, processor circuit 1103 may be defined to include memory so that a separate memory circuit is not required. Wireless communication device UE may also include an interface (such as a user interface) coupled with processor 1103, and/or wireless communication device UE may be incorporated in a vehicle.

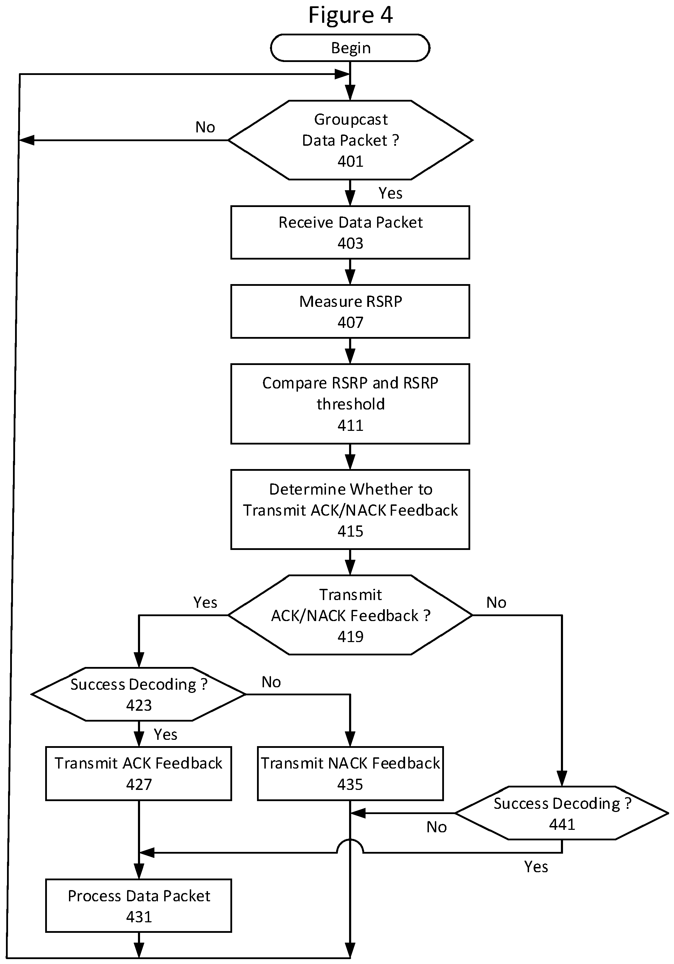

As discussed herein, operations of wireless communication device UE 1100 may be performed by processor 1103 and/or transceiver 1101. For example, processor 1103 may control transceiver 1101 to transmit communications through transceiver 1101 over a radio interface to another UE and/or to receive communications through transceiver 1101 from another UE over a radio interface. In addition, processor 1103 may control transceiver 1101 to receive communications through transceiver 1101 from Radio Access Network base station (e.g., an eNodeB/eNB or gNodeB/gNB). Moreover, modules may be stored in memory 1105, and these modules may provide instructions so that when instructions of a module are executed by processor 1103, processor 1103 performs respective operations (e.g., operations discussed below with respect to the Example Embodiments and/or one or more of Figures 4-5).

Figure 3 is a block diagram illustrating elements of a node (also referred to as a network node, base station, eNB, eNodeB, gNB, gNodeB, etc.) of a Radio Access Network (RAN) configured to provide cellular communication according to embodiments of inventive concepts. As shown, the network node may include a transceiver circuit 1201 (also referred to as a transceiver) including a transmitter and a receiver configured to provide uplink and downlink radio communications with wireless communication devices UEs. The network node may include a network interface circuit 1207 (also referred to as a network interface) configured to provide communications with other nodes (e.g., with other base stations and/or core network nodes) of the RAN and/or core network. The network node may also include a processor circuit 1203 (also referred to as a processor) coupled to the transceiver circuit, and a memory circuit 1205 (also referred to as memory) coupled to the processor circuit. The memory circuit 1205 may include computer readable program code that when executed by the processor circuit 1203 causes the processor circuit to perform operations according to embodiments disclosed herein. According to other embodiments, processor circuit 1203 may be defined to include memory so that a separate memory circuit is not required.

As discussed herein, operations of the network node may be performed by processor 1203, network interface 1207, and/or transceiver 1201. For example, processor 1203 may control transceiver 1201 to transmit communications through transceiver 1201 over a radio interface to one or more UEs and/or to receive communications through transceiver 1201 from one or more UEs over a radio interface. Similarly, processor 1203 may control network interface 1207 to transmit communications through network interface 1207 to one or more other network nodes and/or to receive communications through network interface from one or more other network nodes. Moreover, modules may be stored in memory 1205, and these modules may provide instructions so that when instructions of a module are executed by processor 1203, processor 1203 performs respective operations.

For a broadcast transmission, no feedback from the receivers to the transmitter may be required. Indeed, feedback for broadcast transmissions may even be undesirable since it can quickly congest the network. This is not the case for groupcast or unicast transmissions because such transmissions often aim at a limited number of receivers with potentially some expected level of reliability and/or data rate. As a result, certain mechanisms for feedback and retransmission, such as the Hybrid Automatic Repeat Request HARQ scheme, may be both feasible and/or useful/necessary for unicast and groupcast.

There are two main methods of performing groupcast, i.e., sending a common message to a group of receivers:

- Method 1: the sender V2X wireless device UE of the message forms multiple unicast connections, one to each individual V2X wireless device UE in the group and sends the message over these unicast connections. This is often called groupcast by multiple unicast.

- Method 2: the group of V2X wireless devices UEs share a common group ID, the sender V2X wireless device UE sends the message to all other V2X wireless devices UEs at once, using that group ID.

Method 1 may be more complex than method 2, since it does not leverage the fact that the message is common for the whole group. In the worst case -- where every V2X wireless device UE groupcasts a message -- the number of unicast connections scales with the square of the number of V2X wireless devices UEs. For the same reason, method 1 may also consume more radio resources, both for transmitting messages and for sending feedbacks. Method 2, on the other hand, can allow for ways of disseminating messages and obtaining feedback in the group. One feedback and retransmission scheme for groupcast being proposed in 3GPP works as follows:

- All members in a groupcast session, such as vehicles in a platoon, share a common group ID used for their groupcast communication. This can be done, for example, in a group discovery process or by preconfiguration, which are outside the scope of the current disclosure.

- Each time a V2X wireless device UE wants to send a message to the other V2X wireless devices UEs in the group, it embeds or scrambles the group ID with a packet carrying the message.

- Depending on the outcome of the decoding of the packet, each receiver V2X wireless device UE in the group sends an ACK or a NACK (either implicitly or explicitly, which is outside the scope of the present disclosure). The ACK or the NACK also utilizes the group ID, no individual UE ID in the ACK or NACK message is needed.

- When the transmitter V2X wireless device UE receives a NACK (or equivalently not receiving ACKs from all the receiver V2X wireless devices UEs), it performs a retransmission of the packet (for example, resending the same packet or a redundancy version of the packet).

State-of-the-art groupcast protocols described above may only require a common group ID for the whole group and the decision for retransmission may be relatively simple. However, the protocol comes with a potential problem: The transmitter may end up retransmitting unnecessarily a packet many times, and as a result the receivers may need to send ACK/NACK feedbacks many times, leading to inefficient use of radio resources. Two typical scenarios related to the above problem are as follows:

- Scenario 1: When one or few of the receivers happen to be in very bad propagation condition, e.g., be blocked by a big truck for a while, then those receivers will keep sending NACKs or no ACKs will be received from them. Consequently, the transmitter retransmits the packet again and again, and other receivers keep sending their ACK/NACK although they have received the packet correctly.

- Scenario 2: It can happen that in different (re)transmission attempts of the same packet, different receivers fail to receive the packet. Since only the group ID is used for the ACK/NACK, the transmitter of the packet will not be able to identify which of the receivers have failed to receive the packet (the transmitter only knows that there are some receivers who failed to receive). Consequently, the transmitter keeps retransmitting the packet unnecessarily.

Issues noted above may need to be addressed for the groupcast protocol to be more efficient and/or effective.

According to some embodiments of inventive concepts, methods may be defined by a set of different rules to reduce/limit feedback transmissions in sidelink groupcast. For example, a set of rules may be applied at the V2X wireless device UE that transmits ACK/NACK feedback (i.e., the V2X wireless device UE that receives a data packet) to send the ACK/NACK only when useful/necessary.

Some embodiments of inventive concepts may provide a mechanism to balance between reduced complexity and cost in terms of resource use for groupcast in V2X communications. This may help to improve/optimize benefits of groupcast for sidelink V2X.

To reduce/limit inefficient use of radio resources due to excessive retransmissions of the same packet and/or excessive use of resources used to send HARQ ACK/NACK feedback, certain rules on when and how the HARQ ACK/NACK feedback transmission should take place may be provided. In the following disclosure, rules are described which can be applied individually or collectively when appropriate.

HARQ ACK/NACK feedback transmitted from a V2X wireless device that received a data packet could be in the form of either ACK (Acknowledgement) in case the packet is decoded successfully or NACK (Negative Acknowledgement) in case the packet is not decoded successfully.

In embodiments disclosed below, it is assumed that the receiver V2X wireless device UE of a data packet measures the Reference Signal Received Power (RSRP) using a reference signal (RS) transmitted from the transmitter V2X wireless device UE. Generally, the RSRP is an indication of the channel gain (or loss) between the transmitter and the receiver V2X wireless device UEs (of the data packet), which in turn has some correlation with the physical distance between the transmitter and the receiver. Some disclosed embodiments may use such relations to reduce a number of HARQ ACK/NACK feedbacks sent in the network.

Embodiments of rules to be applied at the V2X wireless device UE transmitting the ACK/NACK feedback (i.e. the receiver V2X wireless device UE of a data packet) are discussed below.

According to a some embodiments of inventive concepts, a V2X wireless device UE determines whether or not to send HARQ ACK/NACK feedback based on comparing the RSRP with a certain RSRP threshold. For example, if the RSRP is below a certain threshold, the V2X wireless device UE sends HARQ ACK/NACK feedback, and if the RSRP is above the threshold, the V2X wireless device UE does not send HARQ ACK/NACK feedback. In another example, if the RSRP is below a certain threshold, the V2X wireless device UE does not send HARQ feedback, and if the RSRP is above the threshold, the V2X wireless device UE sends HARQ feedback.

- According to a sub-embodiment, a V2X wireless device UE transmits HARQ ACK/NACK feedback (either ACK or NACK based on the outcome of data decoding) based on criteria defined using both the RSRP and the physical distance from the V2X wireless device UE to the transmitter UE that transmitted the packet. In one example, the V2X wireless device UE decides not to transmit any HARQ feedback (i.e., neither NACK nor ACK) if the RSRP is below a threshold and the distance to the transmitter V2X wireless device UE is greater than the communication range requirement of the packet. In another example, the V2X wireless device UE decides not to transmit any HARQ feedback (i.e., neither NACK nor ACK) if either the RSRP is below a threshold or the distance to the transmitter V2X wireless device UE is greater than the communication range requirement of the packet.

- According to another sub-embodiment, a network may (pre-)configure the criteria to be used by the V2X wireless device UE to decide if HARQ ACK/NACK feedback could be transmitted. For instance, depending on the communication scenarios and/or use cases, (pre-)configuration may allow either RSRP-based criteria or distance-based criteria or both RSRP-based and distance-based criteria.

- According to another sub-embodiment, the distance between transmitter and receiver V2X wireless devices UEs can be determined/calculated based on their Global Positioning System GPS location or equivalent derived from an actual GPS location. Similarly, the distance between the transmitter and receiver V2X wireless devices UEs can be calculated based on certain identifiers IDs such as zone ID or any other local ID which is assigned according to the actual position during the connection establishment phase.

According to some other embodiments of inventive concepts, a V2X wireless device UE may only send HARQ ACK if the RSRP is below a first threshold (e.g., threshold A) and only send HARQ NACK if the RSRP is above a second threshold (threshold B). For example, a V2X wireless device UE further away from the transmitter V2X wireless device UE may likely have a lower RSRP value and it may be more likely that the V2X wireless device UE will not decode the data packet correctly. Therefore, it may be more meaningful/relevant for the V2X wireless device UE to transmit only HARQ ACK (which happens when the V2X wireless device UE decodes the data packet successfully). Conversely, a V2X wireless device UE closer to the transmitter V2X wireless device UE will likely have a higher RSRP value and it is more likely that the V2X wireless device UE will decode the data packet correctly. Therefore, transmitting only HARQ NACK (when the data decoding fails) may be more meaningful/relevant.

- According to a sub-embodiment, threshold A and threshold B used in the above embodiment may be the same.
- According to another sub-embodiment, a network may (pre-)configure the criteria to be used by the V2X wireless device UE to decide whether only HARQ ACK or only HARQ NACK or both could/should be transmitted. For example, for some scenarios and/or use cases, (pre-)configuration may allow only HARQ ACK transmissions if RSRP is below a threshold and only HARQ NACK transmissions if RSRP is above a threshold. Whereas, for some other scenarios, (pre-)configuration may allow only HARQ ACK transmissions if RSRP is above the threshold and only HARQ NACK transmissions if RSRP is below a threshold.

In some embodiments, the RSRP threshold(s) as described in the above embodiments may be defined as a function of Quality of Service QoS parameters such as reliability or latency. For example, a service with a higher reliability requirement, may define a lower RSRP threshold(s) and a service with a lower reliability requirement may define a higher RSRP threshold(s).

In some embodiments, the RSRP threshold(s) as described in above embodiments may be defined as a function of a communication range requirement of a service. For example, a service with higher communication range requirement may define a lower RSRP threshold(s), and a service with lower communication range requirement may define a higher RSRP threshold(s).

In some embodiments, the RSRP threshold(s) as described in above embodiments may be defined as a function of channel congestion level, e.g., Channel Busy Ratio CBR. For example, a higher channel congestion level may yield a higher RSRP threshold(s), if the V2X wireless device UE only sends HARQ ACK/NACK feedback when RSRP measurement is higher than the RSRP threshold. Similarly, a lower channel congestion level may yield a lower RSRP threshold(s), if the V2X wireless device UE only sends HARQ ACK/NACK feedback when RSRP measurement is higher than the RSRP threshold.

In some embodiments, the RSRP thresholds as described in above embodiments may be defined as a function of all the three factors: communication range requirement, QoS requirement of a service, and/or the channel congestion level; or a combination of any two factors among them.

Embodiments regarding RSRP measurements are discussed below.

In some embodiments, the RSRP may be measured on any kind of reference signal(s) used over sidelink such as Channel State Information Reference Signal CSI-RS, Sounding Reference Signal SRS, and/or Demodulation Reference Signal DMRS, or is a combination of measurements on one or more of these reference signals.

- In some embodiments, RSRP may be measured on the DMRS of the Physical Sidelink Control Channel (PSCCH).

An advantage of using the DMRS may be that the PSCCH is typically not pre-coded or beamformed and is transmitted using a more robust modulation and coding scheme (MCS) than the Physical Sidelink Shared Channel (PSSCH). Therefore, the RSRP measured on the PSCCH may be a good indicator of the channel gain (or loss) between the transmitter and the receiver. For the same reason, the RSRP can be measured on the CSI-RS.

- In other embodiments, RSRP may be measured on the DMRS of the Physical Sidelink Shared Channel (PSSCH).

In some embodiments, the receiver V2X wireless device UE may already know the transmission power used by the transmitter V2X wireless device UE. For example, the transmission power in the case of a groupcast can be (pre-)configured. This may enable the receiver V2X wireless device UE to estimate the channel gain (or loss) based on the RSRP.

In still other embodiments, the receiver V2X wireless device UE may estimate the transmission power used by the transmitter V2X wireless device UE based on the communication range requirement of the particular service. For example, the receiver V2X wireless device UE may use the same power control formula as that of the transmitter V2X wireless device UE to estimate the transmission power being used by the other V2X wireless device UE.

Some embodiments of inventive concepts may thus reduce/avoid resending a packet again and again in groupcast while only a small portion of the V2X wireless devices UEs in the group fail to receive the packet in the initial transmission and/or in retransmissions. Unnecessary retransmissions may thus be reduced according to some embodiments of inventive concepts.

Operations of a V2X wireless communication device 1100 will now be discussed with reference to the flow chart of Figure 4 according to some embodiments of inventive concepts. For example, modules may be stored in memory 1105 of Figure 2, and these modules may provide instructions so that when the instructions of a module are executed by wireless communication device processor 1103, processor 1103 performs respective operations of the flow chart of Figure 4.

Responsive to a groupcast data packet (transmitted from a second V2X wireless device) at block 401, processor 1103 may receive the data packet (through transceiver 1101) from the second V2X wireless device of the group at block 403. At block 407, processor 1103 may measure a reference signal received power RSRP based on a reference signal received from the second V2X wireless device of the group. At block 411, processor 1103 may compare the RSRP measured at block 407 with an RSRP threshold.

At blocks 415 and 419, processor 1103 may determine whether or not to transmit Acknowledgement/Negative ACK/NACK feedback for the data packet based on the comparison between the RSRP and an RSRP threshold at block 411. According to some embodiments, processor 1103 may determine to transmit ACK/NACK feedback responsive to the RSRP being less than the RSRP threshold, and/or processor 1103 may determine to not transmit ACK/NACK feedback responsive to the RSRP being greater than the RSRP threshold.

When the measured RSRP is less than the RSRP threshold at block 411, processor 1103 may determine at blocks 415 and 419 to transmit ACK/NACK feedback (following the "Yes" output of block 419) based on the RSRP being less than the RSRP threshold. In this case, if the data packet is successfully decoded at block 423, processor 1103 may transmit ACK feedback for the data packet at block 427 responsive to success decoding the data packet, and processor 1103 processes the data packet at block 431 responsive to success decoding the data packet. In this case, if the data packet is not successfully decoded at block 423, processor 1103 may transmit NACK feedback for the data packet responsive to failure decoding the data packet at block 435 without processing the data packet.

When the measured RSRP is greater than the RSRP threshold at block 411, processor 1103 may determine at blocks 415 and 419 to not transmit ACK/NACK feedback (following the "No" output of block 419) based on the RSRP being greater than the RSRP threshold. In this case, if the data packet is successfully decoded at block 441, processor 1103 may process the data packet at block 431 responsive to success decoding the data packet without transmitting ACK feedback. In this case, if the data packet is not successfully decoded at block at block 441, processor 1103 may neither process the data packet nor transmit NACK feedback for the data packet.

The RSRP threshold of Figure 4 may be determined at the first V2X wireless device based on a known transmission power used by the second V2X wireless device to transmit the reference signal, and/or based on an estimate of transmission power used by the second V2X wireless device to transmit the reference signal. In addition, measuring the RSRP at block 407 may include measuring the RSRP using at least one of a demodulation reference signal DMRS, a sounding reference signal SRS, and/or a channel state information reference signal CSI-RS. Moreover, the RSRP threshold may be determined by the first V2X wireless device based on at least one of a quality of service QoS, parameter associated with the group, a communication range requirement of a service associated with the group, and/or a channel congestion level.

Each groupcast data packet of the group from one or more other V2X wireless devices of the group may thus be handled in accordance with the operations illustrated in Figure 4 as discussed above. For example, a first data packet from the second V2X wireless device of the group may be processed through blocks 419, 423, 427 (transmitting ACK feedback for the first data packet), and 431 (processing the first data packet) responsive to a corresponding first RSRP measured at block 411 being less than the RSRP threshold and responsive to success decoding the first data packet. A second data packet from the second (or another) V2X wireless device of the group may be processed through blocks 419, 423, and 435 (transmitting NACK feedback for the second data packet without processing the second data packet) responsive to a corresponding second RSRP measured at block 411 being less than the RSRP threshold and responsive to failure decoding the second data packet. A third data packet from the second (or another) V2X wireless device of the group may be processed through blocks 419, 441, and 431 (processing the third data packet without transmitting ACK feedback for the third data packet) responsive to a corresponding third RSRP measured at block 411 being greater than the RSRP threshold and responsive to success decoding the third data packet. A fourth data packet from the second (or another) V2X wireless device of the group may be processed through blocks 419 and 441 (without processing the fourth data packet and without transmitting NACK feedback) responsive to a corresponding fourth RSRP measured at block 411 being greater than the RSRP threshold and responsive to failure decoding the fourth data packet. While the data packets are named first, second, third, and fourth data packets, the terms first, second, third, and fourth are used to distinguish the different data packets without implying an order in time.

According to embodiments discussed above, whether to transmit ACK/NACK feedback may be determined based on the RSRP measured for a data packet being less/greater than an RSRP threshold. According to some other embodiments, processor 1103 may determine to transmit ACK/NACK feedback responsive to the RSRP being less than the RSRP threshold or responsive to a distance between the first and second V2X wireless devices being greater than a distance threshold (resulting in operations following the "Yes" output of block 419), or processor 1103 may determine to not transmit ACK/NACK feedback responsive to the RSRP being greater than the RSRP threshold and responsive to a distance between the first and second V2X wireless devices being less than the distance threshold (resulting in operations following the "No" output of block 419). In such embodiments, the distance threshold may be determined based on a communication range requirement of the data packet, and/or based on a configuration received from a radio access network. Moreover, the distance between the first and second wireless devices may be derived based on global positioning system GPS information for the first wireless device, based on GPS information received from the second wireless device, based on an area identifier for the first wireless device assigned by a radio access network, and/or based on an area identifier for the second wireless device received from the second wireless device.

Various operations from the flow chart of Figure 4 may be optional with respect to some embodiments of wireless communication devices and related methods. Regarding methods of some embodiments, for example, operations of blocks 401, 411, 415, 423, 427, 431, 435, and 441 of Figure 4 may be optional.

Operations of a V2X wireless communication device 1100 will now be discussed with reference to the flow chart of Figure 4 according to some other embodiments of inventive concepts. For example, modules may be stored in memory 1105 of Figure 2, and these modules may provide instructions so that when the instructions of a module are executed by wireless communication device processor 1103, processor 1103 performs respective operations of the flow chart of Figure 4.

Responsive to a groupcast data packet (transmitted from a second V2X wireless device) at block 401, processor 1103 may receive the data packet (through transceiver 1101) from the second V2X wireless device of the group at block 403. At block 407, processor 1103 may measure a reference signal received power RSRP based on a reference signal received from the second V2X wireless device of the group. At block 411, processor 1103 may compare the RSRP measured at block 407 with an RSRP threshold.

At blocks 415 and 419, processor 1103 may determine whether or not to transmit Acknowledgement/Negative ACK/NACK feedback for the data packet based on the comparison between the RSRP and an RSRP threshold at block 411. According to some embodiments, processor 1103 may determine to transmit ACK/NACK feedback responsive to the RSRP being greater than the RSRP threshold, and/or processor may determine to not transmit ACK/NACK feedback responsive to the RSRP being less than the RSRP threshold.

When the measured RSRP is greater than the RSRP threshold at block 411, processor 1103 may determine at blocks 415 and 419 to transmit ACK/NACK feedback (following the "Yes" output of block 419) based on the RSRP being greater than the RSRP threshold. In this case, if the data packet is successfully decoded at block 423, processor 1103 may transmit ACK feedback for the data packet at block 427 responsive to success decoding the data packet. In this case, if the data packet is not successfully decoded at block 423, processor 1103 may transmit NACK feedback for the data packet responsive to failure decoding the data packet at block 435 without processing the data packet.

When the measured RSRP is less than the RSRP threshold at block 411, processor 1103 may determine at blocks 415 and 419 to not transmit ACK/NACK feedback (following the "No" output of block 419) based on the RSRP being less than the RSRP threshold. In this case, if the data packet is successfully decoded at block 411, processor 1103 process the data packet at block 431 responsive to success decoding the data packet without transmitting ACK feedback. In this case, if the data packet is not successfully decoded at block 441, processor 1103 may neither process the data packet nor transmit NACK feedback for the data packet.

The RSRP threshold of Figure 4 may be determined at the first V2X wireless device based on a known transmission power used by the second V2X wireless device to transmit the reference signal, and/or based on an estimate of transmission power used by the second V2X wireless device to transmit the reference signal. In addition, measuring the RSRP at block 407 may include measuring the RSRP using at least one of a demodulation reference signal DMRS, a sounding reference signal SRS, and/or a channel state information reference signal CSI-RS. Moreover, the RSRP threshold may be determined by the first V2X wireless device based on at least one of a quality of service QoS, parameter associated with the group, a communication range requirement of a service associated with the group, and/or a channel congestion level.

Each groupcast data packet of the group from one or more other V2X wireless devices of the group may thus be handled in accordance with the operations illustrated in Figure 4 as discussed above. For example, a first data packet from the second V2X wireless device of the group may be processed through blocks 419, 423, 427 (transmitting ACK feedback for the first data packet), and 431 (processing the first data packet) responsive to a corresponding first RSRP measured at block 411 being greater than the RSRP threshold and responsive to success decoding the first data packet. A second data packet from the second (or another) V2X wireless device of the group may be processed through blocks 419, 423, and 435 (transmitting NACK feedback for the second data packet without processing the second data packet) responsive to a corresponding second RSRP measured at block 411 being greater than the RSRP threshold and responsive to failure decoding the second data packet. A third data packet from the second (or another) V2X wireless device of the group may be processed through blocks 419, 441, and 431 (processing the third data packet without transmitting ACK feedback for the third data packet) responsive to a corresponding third RSRP measured at block 411 being less than the RSRP threshold and responsive to success decoding the third data packet. A fourth data packet from the second (or another) V2X wireless device of the group may be processed through blocks 419 and 441 (without processing the fourth data packet and without transmitting NACK feedback) responsive to a corresponding fourth RSRP measured at block 411 being less than the RSRP threshold and responsive to failure decoding the fourth data packet. While the data packets are named first, second, third, and fourth data packets, the terms first, second, third, and fourth are used to distinguish the different data packets without implying an order in time.

According to embodiments discussed above, whether to transmit ACK/NACK feedback may be determined based on the RSRP measured for a data packet being greater/less than an RSRP threshold. According to some other embodiments, processor 1103 may determine to transmit ACK/NACK feedback responsive to the RSRP being greater than the RSRP threshold or responsive to a distance between the first and second V2X wireless devices being less than a distance threshold (resulting in operations following the "Yes" output of block 419), or processor 1103 may determine to not transmit ACK/NACK feedback responsive to the RSRP being less than the RSRP threshold and responsive to a distance between the first and second V2X wireless devices being greater than the distance threshold (resulting in operations following the "No" output of block 419). In such embodiments, the distance threshold may be determined based on a communication range requirement of the data packet, and/or based on a configuration received from a radio access network. Moreover, the distance between the first and second wireless devices may be derived based on global positioning system GPS information for the first wireless device, based on GPS information received from the second wireless device, based on an area identifier for the first wireless device assigned by a radio access network, and/or based on an area identifier for the second wireless device received from the second wireless device.

Various operations from the flow chart of Figure 4 may be optional with respect to some embodiments of wireless communication devices and related methods. Regarding methods of some embodiments, for example, operations of blocks 401, 411, 415, 423, 427, 431, 435, and 441 of Figure 4 may be optional.

Operations of a V2X wireless communication device 1100 will now be discussed with reference to the flow chart of Figure 5 according to still other embodiments of inventive concepts. For example, modules may be stored in memory 1105 of Figure 2, and these modules may provide instructions so that when the instructions of a module are executed by wireless communication device processor 1103, processor 1103 performs respective operations of the flow chart of Figure 5.

Responsive to a groupcast data packet (transmitted from a second V2X wireless device) at block 501, processor 1103 may receive the data packet (through transceiver 1101) from the second V2X wireless device of the group at block 503. At block 507, processor 1103 may measure a reference signal received power RSRP based on a reference signal received from the second V2X wireless device of the group. At block 511, processor 1103 may compare the RSRP measured at block 507 with an RSRP threshold. At blocks 515, 517, and 519, processor 1103 may determine whether or not to transmit Acknowledgement/Negative ACK/NACK feedback for the data packet based on the comparison between the RSRP and an RSRP threshold at block 511.

If the RSRP measured at block 511 is greater than the RSRP threshold at block 515, processor 1103 determines, according to the invention, to not transmit ACK feedback responsive to the RSRP being greater than the RSRP threshold and responsive to successfully decoding the data packet at block 517. If the RSRP is greater than the RSRP threshold, processor 1103 may process the data packet at block 541 (without transmitting ACK feedback for the data packet) responsive to the RSRP being greater than the RSRP threshold and responsive to successfully decoding the data packet. Moreover, processor 1103 may determine to transmit NACK feedback responsive to the RSRP being greater than the RSRP threshold and responsive to failure decoding the data packet at block 517. If the RSRP is greater than the RSRP threshold, processor 1103 may transmit NACK feedback for the data packet at block 519 (without processing the data packet) responsive to the RSRP being greater than the RSRP threshold and responsive to failure decoding the data packet.

If the RSRP measured at block 511 is less than the RSRP threshold at block 515, processor 1103 determines, according to the invention, to not transmit NACK feedback responsive to the RSRP being less than the RSRP threshold and responsive to failure decoding the data packet at block 537. If the RSRP is less than the RSRP threshold, processor 1103 may determine to transmit ACK feedback at block 539 responsive to the RSRP being less than the RSRP threshold and responsive to success decoding the data packet at block 537. In this case, processor 1103 may transmit ACK feedback for the data packet at block 539 responsive to the RSRP being less than the RSRP threshold and responsive to success decoding the data packet at block 537, and processor 1103 may process the data packet at block 541 responsive to the RSRP being less than the RSRP threshold and responsive to success decoding the data packet.

The RSRP threshold of blocks 511 and 515 may be determined based on a configuration received form a radio access network. According to the invention, the RSRP threshold of blocks 511 and 515 are first and second RSRP thresholds such that the first RSRP threshold is used for the greater than ">" decision and the second RSRP threshold is used for the less than "<" decision. In other words, processor 1103 proceeds to block 517 if the RSRP is greater than the first RSRP threshold, processor 1103 proceeds to block 537 if the RSRP is less than the second RSRP threshold, and the first RSRP threshold may be greater than the second RSRP threshold. According to some other embodiments, the first and second RSRP thresholds may be the same.

Each groupcast data packet of the group from one or more other V2X wireless devices of the group may thus be handled in accordance with the operations illustrated in Figure 5 as discussed above. For example, a first data packet from the second V2X wireless device of the group may be processed through blocks 515, 537, 539 (transmitting ACK feedback for the first data packet), and 541 (processing the first data packet) responsive to a corresponding first RSRP measured at block 511 being less than the RSRP threshold at block 515 and responsive to success decoding the first data packet at block 537. A second data packet from the second (or another) V2X wireless device of the group may be processed through blocks 515, 517, and 519 (transmitting NACK feedback for the second data packet without processing the second data packet) responsive to a corresponding second RSRP measured at block 511 being greater than the RSRP threshold at block 515 and responsive to failure decoding the second data packet at block 517. A third data packet from the second (or another) V2X wireless device of the group may be processed through blocks 515, 517, and 541 (processing the third data packet without transmitting ACK feedback for the third data packet) responsive to a corresponding third RSRP measured at block 511 being greater than the RSRP threshold at block 515 and responsive to success decoding the third data packet at block 517. A fourth data packet from the second (or another) V2X wireless device of the group may be processed through blocks 515 and 537 (without processing the fourth data packet and without transmitting NACK feedback) responsive to a corresponding fourth RSRP measured at block 511 being less than the RSRP threshold at block 515 and responsive to failure decoding the fourth data packet at block 537. While the data packets are named first, second, third, and fourth data packets, the terms first, second, third, and fourth are used to distinguish the different data packets without implying an order in time.

The RSRP threshold of Figure 5 may be determined at the first V2X wireless device based on a known transmission power used by the second V2X wireless device to transmit the reference signal, and/or based on an estimate of transmission power used by the second V2X wireless device to transmit the reference signal. In addition, measuring the RSRP at block 507 may include measuring the RSRP using at least one of a demodulation reference signal DMRS, a sounding reference signal SRS, and/or a channel state information reference signal CSI-RS. Moreover, the RSRP threshold may be determined by the first V2X wireless device based on at least one of a quality of service QoS, parameter associated with the group, a communication range requirement of a service associated with the group, and/or a channel congestion level.

Various operations from the flow chart of Figure 5 may be optional with respect to some embodiments of wireless communication devices and related methods. Regarding methods of some embodiments, for example, operations of blocks 501, 511, 519, 539, and 541.

The following portions of the present disclosure discuss sidelink physical layer procedures.

A work item description (WID) for NR V2X Rel-16 has been agreed by RAN plenary #83, referred to as Reference [1]. The following portions of the present disclosure discuss the aspects related to sidelink physical layer procedures. In particular, the main topics include: Sidelink HARQ for unicast and groupcast; Sidelink CSI report and sidelink CSI RS; and Open-loop power control.

The study of the unicast and groupcast sidelink V2X communications is included in the SID. It has been agreed that HARQ feedback will be supported for SL unicast and groupcast. Besides, in RAN1 the following agreements related to HARQ feedback were made.

It has been agreed that when SL HARQ feedback is enabled for unicast, the following operation is supported for the non-CBG (Code Block Group) case:

◦ Receiver UE generates HARQ-ACK if it successfully decodes the corresponding TB. It generates HARQ-NACK if it does not successfully decode the corresponding TB after decoding the associated PSCCH which targets the receiver UE.
◦ FFS whether to support SL HARQ feedback per CBG

It has been agreed that when SL HARQ feedback is enabled for groupcast, the following operations are further studied for the non-CBG case:

◦ Option 1: Receiver UE transmits HARQ-NACK on PSFCH if it fails to decode the corresponding TB after decoding the associated PSCCH. It transmits no signal on PSFCH otherwise. Details are FFS including the following:

- Whether to introduce an additional criterion in deciding HARQ-NACK transmission
- Whether/how to handle DTX issue (i.e., transmitter UE cannot recognize the case that a receiver UE misses PSCCH scheduling PSSCH)
- Issues when multiple receiver UEs transmit HARQ-NACK on the same resource

  • How to determine the presence of HARQ-NACK transmissions from receiver UEs

  • Whether/how to handle destructive channel sum effect of HARQ-NACK transmissions from multiple receiver UEs if the same signal is used

◦ Option 2: Receiver UE transmits HARQ-ACK on PSFCH if it successfully decodes the corresponding TB. It transmits HARQ-NACK on PSFCH if it does not successfully decode the corresponding TB after decoding the associated PSCCH which targets the receiver UE. Details are FFS including the following:

- Whether to introduce an additional criterion in deciding HARQ-ACK/NACK transmission
- How to determine the PSFCH resource used by each receiver UE

◦ FFS whether to support SL HARQ feedback per CBG
◦ Other options are not precluded

It is a working assumption that when HARQ feedback is enabled for groupcast support:

◦ Option 1: Receiver UE transmits only HARQ NACK
◦ Option 2: Receiver UE transmits HARQ ACK/NACK
◦ FFS applicability of option 1 and option 2 - this part is particularly relevant to confirm (or not) the working assumption

It has been agreed that it is supported that in mode 1 for unicast, the in-coverage UE sends an indication to gNB to indicate the need for retransmission

◦ At least PUCCH is used to report the information

- If feasible, RAN1 reuses PUCCH defined in Rel-15

◦ The gNB can also schedule re-transmission resource
◦ FFS transmitter UE and/or receiver UE

- If receiver UE, the indication is in the form of HARQ ACK/NAK
- If transmitter UE, FFS

It has been agreed that (Pre-)configuration indicates whether SL HARQ feedback is enabled or disabled in unicast and/or groupcast.

◦ When (pre-)configuration enables SL HARQ feedback, FFS whether SL HARQ feedback is always used or there is additional condition of actually using SL HARQ feedback.

It has been agreed that (Pre-)configuration indicates the time gap between PSFCH and the associated PSSCH for Mode 1 and Mode 2.

It has been agreed that in mode 1 for unicast and groupcast, it is supported for the transmitter UE via Uu link to report an indication to gNB to indicate the need for retransmission of a TB transmitted by the transmitter UE.

○ FFS the format of the indication, e.g., in the form of HARQ ACK/NACK, or in the form of SR/BSR, etc.

RAN1 continues discussion on whether to support report from the receiver UE

○ No inter-BS communication will be considered.

It has been agreed that for sidelink groupcast, it is supported to use TX-RX distance and/or RSRP in deciding whether to send HARQ feedback.

○ Details to be discussed during WI phase, including whether the information on TX-RX distance is explicitly signaled or implicitly derived, whether/how this operation is related to resource allocation, accuracy of distance and/or RSRP, the aspects related to "and/or", etc.
○ This feature can be disabled/enabled

In the following portions of the present disclosure, HARQ for sidelink unicast and groupcast is discussed.

NR SL targets uses cases with packet sizes ranging from a few tens of bits to several thousands of bits. For the higher end, CB (Code Block) segmentation is necessarily applied. At the same time, the NR PHY uses a frequency-first mapping of coded bits to resource elements. Given the high time selectivity that characterizes V2X channels, different CBs will experience different channel conditions, better for some worse for others. That is, if different CBs are transmitted over difference coherence intervals, the probability of decoding them correctly will be independent. Such scenario calls for acknowledgment of CBs in groups (i.e., CBGs), avoiding retransmission of large numbers of bits. At the same time, it seems reasonable to limit the utilization of CBG-based feedback to those situations in which it is indeed useful (e.g., for big packet sizes, etc.). Therefore, we believe that the CBG based HARQ feedback can be made configurable, i.e. the network configures UEs operating in-coverage and for out-of-coverage UEs, it can be pre-configured.

A first proposal is that for SL HARQ, CBG-based HARQ feedback is supported and is (pre-)configured.

When it comes to enabling/disabling HARQ feedback, it was agreed to enable or disable HARQ feedback based on (pre-)configuration. Furthermore, HARQ enabling/disabling may also take congestion control and QoS or V2X service requirements in account based on the predefined rules. From signalling perspective, the following two mechanisms may be sufficient:

a) For Mode 1 UEs, the use of HARQ feedback is decided by the gNB (e.g., considering QoS, congestion reports, etc.).
b) For Mode 2 UEs, the UE transmitting the TB/CBG decides whether to request feedback or not based on congestion control and QoS.

A first observation is that for Mode 1 UEs the use of HARQ feedback is configured by the network. For Mode 2 UEs, the transmitter of a TB/CBG decides whether to request feedback.

A second proposal is that congestion and QoS requirements are to be considered to enable or disable HARQ.

Furthermore, the indication to receiver UE needs to be included in SCI if HARQ feedback is enabled or not. For instance, a flag indicating the need of HARQ feedback if turned on. Such indication will also allow other UEs to know the presence of PSFCH in case of sensing based resource allocation (i.e. Mode 2).

A third proposal is that SCI carries a field indicating the presence of corresponding HARQ feedback i.e. ACK/NACK.

It is to be noted that in case of groupcast it may also be possible that the receiver of the TB/CBG decide not to send the HARQ feedback although it is (pre-)configured. The criteria by which RX UE can decide about the transmission of HARQ feedback is either RSRP based and/or distance based. Distance-based HARQ feedback may be a relevant criteria for some scenarios. For instance, UEs physically close to each other but blocked by blocker may have very short radio distance. However, such functionality comes at the cost of additional overhead since position related information needs to be transmitted to the receiver UE. Both RSRP based and distance based HARQ feedback may be supported and can be (pre-)configured. Also, it may happen that a network (pre-)configure a UE to use both RSRP and distance and in this case, a UE may be only allowed to skip HARQ feedback transmission when both criteria are not met.

A fourth proposal is that for sidelink groupcast, both distance and RSRP based HARQ feedback criteria is supported and can be (pre-)configured.

Furthermore, during the SI, a working assumption was made to support both HARQ Option 1 (i.e. only NACK is transmitted) and HARQ Option 2 (i.e. both ACK/NACK is transmitted) for groupcast. The reason to support both the options is their applicability in different scenarios. For instance, there could be two types of groupcast communications:

(1) Groupcast with connection establishment, and (2) Groupcast without connection establishment.

For case groupcast with connection establishment, where transmitter and receivers are aware of each other's presence, HARQ Option 2 may be the proper framework for transmission of feedback with the following considerations:

a) There is no additional criterion in deciding transmission of HARQ ACK/NACK. That is, all receivers transmit ACK (or NACK) if they are able (or not) to decode the TB/CBG. Should any further restriction be desirable, then it should be part of the group definition. In other words, if certain UEs are not expected to transmit ACK/NACK, then they should not be part of the group.

b) Resources used for transmission of ACK should be UE-specific. Resources used for transmission of NACK may be UE-specific or group-specific. This allows the receiver of the feedback transmissions to know which UEs correctly received the transmission and/or whether some UE received PSCCH but failed to decode the corresponding TB/CBG.

For groupcast communication without connection establishment i.e. case (2), HARQ Option 1 may be the appropriate framework for HARQ feedback. In this case, the following can be observed:

a) Since there is no connection establishment phase and groups are formed on a transmission-by-transmission basis, it is necessary to restrict the transmission to only NACK messages.

b) DTX issues are not handled in this case. Dealing with such issues may require some sort of connection establishment phase, which is covered in the case discussed before.

HARQ Option 1 may be used on top of HARQ Option 2 for large groups with limited PSFCH resources. In such case, it can happen that a UE joining the group at later point in time may not be able to transmit ACK messages due to unavailable PSFCH resources. Therefore, for such UEs, it is beneficial to only transmit HARQ NACK (i.e., operate with HARQ Option 1 only).

A fifth proposal is to confirm the working assumption of RAN1#ah-1901 to support both option 1 and option 2 in case of groupcast communication.

For groupcast, having all UEs in the group request HARQ retransmission in case of failed decoded may degrade the performance for all users. Therefore, restrictions on the retransmissions themselves may be considered for both HARQ options. One such criteria is to pre-define thresholds for HARQ ACK or NACK. For instance, a UE retransmits the packet only if total number of HARQ ACKs received are above the threshold.

A second observation is that restrictions on the retransmissions of TB can be applied for both HARQ options for the purpose of congestion control.

Scheduling of HARQ retransmission is discussed below.

In LTE V2X, when selecting a SL resource for the initial transmission, UE selects a SL grant which also contains resources for the HARQ re-transmission. The resources for initial transmission and associated retransmission are then indicated in the SCI, as well as the resource for the next periodic transmission.

The above approach works fine when only blind HARQ retransmissions are supported with no HARQ feedbacks, since the UE can book in advance all the resources for retransmission. However, when HARQ feedbacks are supported, that approach is prone to higher resource consumption since HARQ retransmissions are selected blindly a priori irrespective of any possible HARQ feedback. In fact, whenever an ACK is received, all the HARQ retransmission occasions previously booked are wasted, unless some mechanism to unbook those resources are introduced, which however requires some signalling resources.

A third observation is that if HARQ feedbacks are configured, the LTE approach in which the transmitting UE selects a SL grant reserving resources for both initial transmission and retransmission is prone to high resource consumption, since HARQ retransmissions are selected blindly a priori, irrespective of any possible HARQ feedback.

Therefore, in NR, a more dynamic and adaptive resource allocation scheme for retransmission can be envisioned, i.e. retransmissions are scheduled based on HARQ feedbacks. In mode-1, retransmissions are scheduled by gNB. In mode-2, retransmissions are scheduled autonomously by UE requiring pre-reservation. It seems a more reasonable approach if resources for further retransmissions are booked one by one and indicated in the previous (re)transmission SCI. In this way, by using resource booking, the re-transmission can minimize the potential collisions with other UEs, thus improve the transmission reliability, and also limit resource wastage.

A sixth proposal is that for mode-2, if HARQ feedbacks are configured, when selecting a SL resource for the initial transmission, UE reserves resource for one HARQ re-transmission. When a UE decides to retransmit, e.g., receiving a NACK in sidelink unicast, resources for further retransmissions are reserved one by one and indicated in the SCI of previous retransmission. When a UE decides to not retransmit, e.g., receiving an ACK in sidelink unicast, it simply ignores the previously booked retransmission resource.

Sidelink CSI report and sidelink CSI-RS are discussed below. In RAN1 #96, the following working assumptions have been made for CSI acquisition.

- For unicast, the following CSI reporting is supported based on non-subband-based aperiodic CSI reporting mechanism assuming no more than 4-port:

  ○ CQI
  ○ RI
  ○ PMI

- CSI reporting can be enabled and disabled by configuration.

  ○ It is supported to configure a subset of the above metric for CSI reporting.

- There is no standalone RS transmission dedicated to CSI reporting in Rel-16
- NR sidelink CSI strives to reuse the CSI framework for NR Uu.

  ○ Discuss details during WI phase

Furthermore, in WID Reference [1], the following agreements have been made.

- Sidelink physical layer procedures as per the study outcome

  ■ CSI acquisition for unicast

    ♦ CQI/RI reporting is supported and they are always reported together. No PMI reporting is supported in this work. Multi-rank PSSCH transmission is supported up to two antenna ports.
    ♦ In sidelink, CSI is delivered using PSSCH (including PSSCH containing CSI only) using the resource allocation procedure for data transmission.

In this section, details of CSI acquisition for sidelink unicast are discussed, including CSI report and the corresponding sidelink CSI-RS (SCSI-RS).

CSI report parameters are discussed below.

As agreed, non-subband-based RI and CQI reports will be supported for sidelink unicast. In Uu transmissions, typically one RI value and the associated PMI and/or CQI are reported, where RI represents the maximum possible transmission rank of the measured channel. However, this may not be suitable for V2X applications which have diverse service requirements in terms of data rate and reliability. More specifically, some NR eV2X use cases may target high data rate while others target high reliability. Accordingly, to satisfy the diverse requirements, some transmitters are interested in multi-layer transmissions while other transmitters are interested in single layer transmissions. Moreover, the packet size can vary over time as well, where the exact packet size will not be known before the packet arrives. If the time-frequency resource is fixed for a transmission, e.g., via a resource booking, the varied packet size may require different numbers of transmission layers. However, when the receiver reports CSI parameters, it is typically not aware of the transmitter's interest, e.g., the transmission requirement or packet size. In this case, it is beneficial to report multiple RIs and the associated CQI values, which gives the transmitter the flexibility to select more proper transmission parameters based on its own needs.

A seventh proposal is that one sidelink CSI report can include multiple RIs and their respectively associated CQIs.

CSI report scheduling is discussed below.

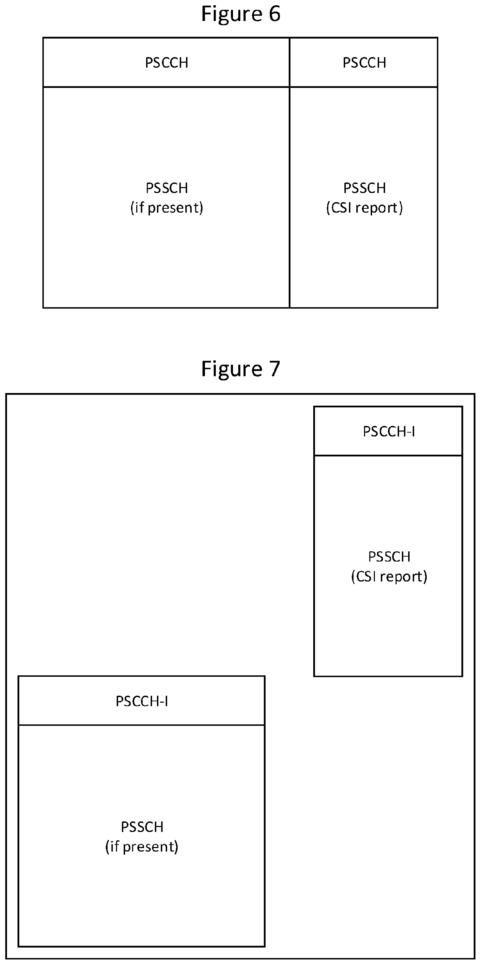

It has been agreed that for sidelink unicast, CSI is delivered using PSSCH (including PSSCH containing CSI only) using the resource allocation procedure for data transmission. Note that for a single UE, it is possible to have two scenarios: 1) CSI report only transmission; 2) simultaneous CSI report and data transmissions. Then, to unify the SCI format design for the two different scenarios, CSI report may have a separate and independent PSCCH even if there is simultaneous data transmission from the same UE. In this way, transmission parameters of the CSI report can be separately adjusted. Also, the number of potential SCI formats are kept low, which eases the blind decoding of PSCCH. An example of transmitting SL CSI reports is illustrated by Figure 6. As shown in Figure 6, if data and CSI report are transmitted simultaneously, two parallel transmissions, possibly adjacent in frequency, take place. In other words, the CSI report and other simultaneous transmissions (e.g. data) are two separate transmissions.

Figure 6 illustrates CSI report transmission using PSSCH.

An eighth proposal is that sidelink CSI report and simultaneous data transmission (if present) are considered as two parallel transmissions and have separate PSCCH.

Then, the next question is, how can a UE select resources when it has both CSI report and data to transmit. If the resource selections are totally independent for CSI report and data, it may very likely end up with the situation shown in Figure 7, i.e., CSI report and data transmissions are neither adjacent in time or frequency. This will bring several potential problems: half-duplex, resource fragmentation, and inter-modulation distortion. Hence, resource selections of CSI report and data transmission may be jointly considered, if they are both present. More specifically, an outcome as illustrated in Figure 1 should be tried to achieve, i.e., CSI report and data are sent in the same slot and they are adjacent in frequency.

Figure 7 illustrates Independent resource selections of CSI report and data.

A ninth proposal is that resource selections of CSI report and data transmission should be jointly considered, if they are both present.

In addition, in SL communication between in-coverage UEs scheduled by gNB (i.e. mode-1), CSI reports can be provided via the gNB or directly between the two UEs. However, to keep a unified design for both in-coverage and out-of-coverage scenarios, it is proposed to always transmit CSI reports over sidelink and in case of gNB scheduling (Mode-1) the UE receiving CSI report (i.e., the SL transmitter) may forward it to the gNB.

A tenth proposal is that in case of NR Mode-1, the UE receiving the CSI report over sidelink may forward the CSI report to the serving gNB.

Sidelink CSI-RS is discussed below.

To assist CSIT acquisition (e.g., RI and CQI reports), reference signals are needed. In some cases, sidelink DMRS is enough for this purpose. For example, when the number of DM-RS ports equals to the number of antenna ports, DM-RS can be used at the receive side to derive RI. However, when DM-RS is subject to the same precoding as data transmission (which is also the principle for NR Uu DM-RS), an additional reference signal type is needed for channel and/or interference measurement. Hencefor, CSIT acquisition a new type of reference signal called SL CSI reference signal (SCSI-RS) may be introduced. The SCSI-RS should be designed in such a way that it facilitates CSIT acquisition either in a reciprocity-based manner and/or in a feedback-based manner. Also, the support for SCSI-RS makes the design future-proof and allows the introduction of Tx schemes that require the non precoded channel estimates.

An eleventh proposal is that sidelink channel state information reference signals (SCSI-RS) are introduced for CSIT acquisition.

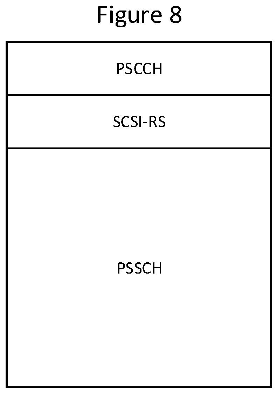

Figure 8 illustrates a slot structure containing SCSI-RS.

Specifically, when channel reciprocity can be exploited, CSIT can be obtained using SCSI-RS transmitted by the peer UE. On the other hand, when channel reciprocity does not hold, SCSI-RS can be used to measure the channel and/or the interference which are then reported back to the transmitter to facilitate CSIT acquisition, which is considered as SL CSI report. Since SCSI-RS may or may not be present in a slot, SCI transmitted over PSCCH may be used to indicate its presence.

A twelfth proposal is that the presence of SCSI-RS in a slot is indicated by an SCI carried by the PSCCH.

In contrast to the NR Uu interface, the transmission of SCSI-RS should always be confined within the allocated bandwidth for sidelink transmission (as shown in Figure 8). This allows the efficient coexistence of different types of communications i.e. unicast, multicast and broadcast. Moreover, to further improve efficiency, the SCSI-RS should not use the whole OFDM symbol but is transmitted in a comb manner with data or DM-RS.

A thirteenth proposal is that transmission of SCSI-RS is confined within the allocated bandwidth for sidelink transmission. SCSI-RS is transmitted in a comb manner with data and/or DMRS.

Sidelink open-loop power control is discussed below. In RAN#ah1901 the following agreements were made.

- SL open-loop power control is supported.

  ◦ For unicast, groupcast, broadcast, it is supported that the open-loop power control is based on the pathloss between TX UE and gNB (if TX UE is in-coverage).

    ▪ This is at least to mitigate interference to UL reception at gNB.
    ▪ Rel-14 LTE sidelink open-loop power control is the baseline.
    ▪ gNB should be able to enable/disable this power control.

  ◦ At least for unicast, it is supported that the open-loop power control is also based on the pathloss between TX UE and RX UE.

    ▪ (Pre-)configuration should be able to enable/disable this power control.
    ▪ FFS whether this is applicable to groupcast
    ▪ FFS whether this requires information signaling in the sidelink.

  ◦ Further study its potential impact, e.g., on resource allocation.

- FFS whether closed-loop power control is additionally needed.

In RAN#96, the following agreements were made.

- For unicast RX UEs, SL-RSRP is reported to TX UE
- For sidelink open loop power control for unicast for the TX UE, TX UE derives pathloss estimation

    ◦ Revisit during the WI phase with respect to whether or not there is a need regarding how to handle pathloss estimation for OLPC before SL-RSRP is available for a RX UE
    ◦ TPC commands for SL PC are not supported

The Role of Power Control in Uplink and Sidelink Transmissions is discussed below including: 2 PC formulas from NR/LTE; Inputs to that formula and how it helps to achieve the target of PC; How the max power should be set/configured; and Applicability of SCSI-RS for RSRP feedback for pathloss est.

For SL transmissions, transmit power control serves the following purposes. It helps to adjust the SL range to the intended receiver and ensure good reception of SL packets at the intended receiver(s), while limiting the interference caused at non-intended receivers. Note that when SL operates in licensed spectrum, limiting the interference power can be very important, especially when SL and cellular resources overlap. It helps to manage the UE power consumption, which may be important for certain UE types (e.g. pedestrian UE). This aspect is less important for vehicle UEs.

A first step in formulating the SL power control mechanism is to base it on the NR standard UL power control mechanism. NR Power control for PUSCH transmissions can be simplified to the following expression:

$$P = \min\{P_{max}, P_0 + \alpha \cdot PL + 10 \cdot \log_{10}(2^\mu \cdot M_{RB}) + \Delta_{TF} + \Delta_{TPC}\}$$

The above equation is a combination of both open-loop and closed-loop control with the following parameters:

- $P_{max}$ is the maximum allowed transmit power configured by higher layers;
- $P_0$ is the targeted or base power, configured by higher layers;
- $\alpha$ is the fractional path-loss compensation factor configured by higher layers;
- $PL$ is the path loss estimation = reference signal power - higher layer filtered RSRP;
- $\mu$ is related to the subcarrier spacing used for the transmission, whose possible values depend on the numerology;
- $M_{RB}$ is the number of resource blocks scheduled for the transmission;
- $\Delta_{TF}$ and $h_{TPC}$ are dynamic offsets to adjust the transmit power taking into account the current modulation and coding scheme (MCS) and explicit transmit power control (TPC) commands from the network.

Since it has been agreed that TPC commands are not supported for SL transmissions, the dynamic offset components $\Delta_{TF}$ and $\Delta_{TPC}$ should not be included for SL power control. Also, from an implementation perspective, it is advantageous if the transmit power control mechanism does not mandate fast power control for SL transmissions related to fast fading effects.

Open-loop power control adjusts the transmit power by configuring an appropriate path loss compensation factor $\alpha$, based on the accuracy of the pathloss estimate $PL$ so that the received power at RX UE is more or less equal to the targeted power $P_0$. The targeted power $P_0$ is configured depending on the target data rate and/or targeted SNR level, and also the interference level experienced at the RX UE.

A fourteenth proposal is that open loop power control is based on the NR UL power control mechanism using the NR UL power control equation for both mode 1 and mode 2 UEs.

The configuration of the open loop power control parameters in mode 1 and mode 2 is for further study.

Open-loop Power Control for Unicast Transmissions is discussed below including 2 alternatives: No info at the TX about measured noise level and interference at the RX (reduced functionality); and Info made available at TX, allows for "fully fledged" PC on the SL.

For unicast, it is supported that the open-loop power control is based on the pathloss between TX UE and RX UE. The TX UE estimates the pathloss from the SL-RSRP reported by the RX UE. The SL RSRP is calculated based on long-term measurements (layer 3 filtered) of a SL reference signal.

Furthermore, besides receiving SL RSRP from the RX UE, it may also be possible that the Tx UE makes use of SL CSI reports to determine the SINR at the Rx UE. This SINR/interference knowledge can the then be utilized to more accurately set the target $P_0$ value.

A fifteenth proposal is that additional reporting about interference at the RX UE should be made available to TX UE for more accurate power control configuration.

Power Control for Groupcast and Broadcast Transmissions is discussed below including.

In the case of broadcast/groupcast transmissions, a possible objective of power control is to maximize the number of intended RX UEs that can successfully decode the message without transmitting with full power as this could lead to unnecessary interference.

Like in the unicast cast, if the pathloss between TX UE and RX UE is considered for the power control mechanism, the TX UE will need to keep track of multiple RSRP feedbacks to calculate pathloss to each individual RX UE within the group. This would also require modifications to the power control expression detailed previously to include multiple RXs. Groupcast UEs may not provide SL RSRP feedback to TX UE.

Instead, open loop power control for groupcast is based on the intended communication range specified by the service. The Tx UE sets the transmission power such that the Rx UEs within this range are capable of successfully decoding the message while minimizing interference and maximizing energy efficiency.

A sixteenth proposal is that open loop SL power control for groupcast considers the communication range requirement.

Explanations for abbreviations from the above disclosure are provided below.

**Abbreviation Explanation**

| | |
|---|---|
| ACK | Acknowledgement |
| AGC | Automatic gain control |
| BS | Base Station |
| BSM | Basic Safety Message |
| BSR | Buffer Status Report |
| CSI | Channel State Information |
| CSI-RS | Channel state information reference signal |
| CSIT | Channel state information at the transmitter |
| CAM | Cooperative awareness message |
| CB | Code Block |
| CBG | Code Block Group |
| CQI | Channel Quality Indicator |
| D2D | Device-to-device communication |
| DENM | Decentralized Environmental Notification Message |
| DM-RS | Demodulation reference signals |
| DTX | Discontinuous Transmission |
| FFS | For Further Study |
| gNB | gNodeB (Radio Access Base Station) |
| GP | Guard period |
| HARQ | Hybrid automatic repeat request |
| LTE | Long-term evolution |
| MCS | Modulation and coding schemes |
| NACK | Negative acknowledgement |
| NR | New radio |
| NW | Network |
| OFDM | Orthogonal frequency division multiplexing |
| OLPC | Open Loop Power Control |
| PC | Power Control |
| PL | Path Loss |
| PHY | Physical layer |
| PMI | Precoding Matrix Indicator |
| ProSe | Proximity-based services |
| PSCCH | Physical sidelink control channel |
| PSFCH | Physical Sidelink Feedback Channel |
| PSSCH | Physical sidelink shared channel |
| PUCCH | Physical Uplink Control Channel |
| QoS | Quality of Service |
| RI | Rank Indicator |
| RS | Reference Signal |
| RSRP | Reference Signal Received Power |
| RX | Receiver |
| SAE | Society of the Automotive Engineers |

WG1TXQ $    wili KPI y4ipo SIIAXIS r̄Ij yjAiL̄ Siir X̄V̄cI WQ tiwwIiiʒ ꜏p

SCI          Sidelink control information
SI           Study item
SCSI-RS      Sidelink CSI-RS
SR           Scheduling Request
SL           SideLink
TB           Transport Block
TPC          Transmit Power Control
TTI          Transmission time interval
TX           Transmitter
UE           User Equipment
Uu link      Link between UE and Base Station
V2I          Vehicle-to-infrastructure
V2P          Vehicle-to-pedestrian
V2V          Vehicle-to-vehicle
V2X          Vehicle-to-anything communication
eV2X         enhanced Vehicle-to-anything communication
WI           Work Item (3GPP)

Citations are provided below for references cited herein.

Reference [1] RP-190766, New WID on 5G V2X with NR sidelink, 3GPP TSG RAN Meeting #83, March 2019.

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

The invention is defined by the appended claims.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description. As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

**Claims**

1. A method of operating a first wireless device (1100) associated with a group including the first wireless device and a second wireless device, the method comprising:

   receiving (403, 503) a first data packet from the second wireless device of the group;
   measuring (407, 507) a first reference signal received power, RSRP, based on a reference signal received from the second wireless device of the group;
   determining (419, 515/517, 515/537) whether or not to transmit Acknowledgement/Negative, ACK/NACK, feedback for the first data packet based on a comparison between the first RSRP and a first RSRP threshold; wherein determining comprises determining to not transmit ACK feedback responsive to the first RSRP being greater than the first RSRP threshold and responsive to successfully decoding the first data packet;
   the method further comprising:

   receiving (503) a second data packet from the second wireless device of the group;
   measuring (507) a second RSRP associated with the second wireless device; and
   determining (515/517) to not transmit NACK feedback for the second data packet responsive to the second RSRP being less than a second RSRP threshold and responsive to failure decoding the second data packet; wherein the first and second RSRP thresholds are different.

2. The method of Claim 1, wherein determining comprises determining to transmit ACK/NACK feedback responsive to the first RSRP being less than the first RSRP threshold or responsive to a distance between the first and second wireless devices being greater than a distance threshold, and/or wherein determining comprises determining to not transmit ACK/NACK feedback responsive to the first RSRP being greater than the first RSRP threshold and responsive to a distance between the first and second wireless devices being less than the distance threshold.

3. The method of Claims 2, wherein the first RSRP is less than the first RSRP threshold, wherein determining comprises determining to transmit ACK/NACK feedback based on the first RSRP being less than the first RSRP threshold, the method further comprising:
   transmitting (427, 435) ACK/NACK feedback for the first data packed based on a result of decoding the first data packet.

4. The method of Claim 1, wherein determining comprises determining to transmit ACK/NACK feedback responsive to the first RSRP being greater than the first RSRP threshold or responsive to a distance between the first and second wireless devices being less than a distance threshold, and/or wherein determining comprises determining to not transmit ACK/NACK feedback responsive to the first RSRP being less than the first RSRP threshold and responsive to a distance between the first and second wireless devices being greater than the distance threshold.

5. The method of any of Claims 2 or 4, wherein the distance threshold is determined based on a communication range requirement of the first data packet.

6. The method of any of Claims 2, 4, or 5, wherein the distance threshold is based on a configuration received from a radio access network.

7. The method of any of Claims 2, 4, 5, or 6, wherein the distance between the first and second wireless devices is derived based on global positioning system, GPS, information for the first wireless device, based on GPS information received from the second wireless device, based on an area identifier for the first wireless device assigned by a radio access network, and/or based on an area identifier for the second wireless device received from the second wireless device.

8. The method of any of Claims 1-7, wherein the first RSRP threshold is determined based on a configuration received form a radio access network.

9. The method of any of Claims 1-8, wherein measuring the first RSRP comprises measuring the first RSRP using at least one of a demodulation reference signal, DMRS, a sounding reference signal, SRS, and/or a channel state information reference signal, CSI-RS.

10. The method of any of Claims 1-9, wherein the first RSRP threshold is determined at the first wireless device based on one or more of

   a known transmission power used by the second wireless device to transmit the reference signal;
   an estimate of transmission power used by the second wireless device to transmit the reference signal; and at least one of a quality of service, QoS, parameter associated with the group; and
   a communication range requirement of a service associated with the group, and/or a channel congestion level.

11. The method of any of Claims 1-10, wherein the first wireless device is a first vehicle-to-vehicle, V2X, wireless device, and wherein the second wireless device is a second V2X wireless device.

12. A first wireless device (1100) wherein the wireless device is adapted to:

   receive a first data packet from a second wireless device of a group, wherein the group includes the first wireless device and the second wireless device;
   measure a first reference signal received power, RSRP, based on a reference signal received from the second wireless device of the group;
   determine whether or not to transmit Acknowledgement/Negative, ACK/NACK, feedback for the first data packet based on a comparison between the first RSRP and a first RSRP threshold;
   wherein determining comprises determining to not transmit ACK feedback responsive to the first RSRP being greater than the first RSRP threshold and responsive to successfully decoding the first data packet;
   the method further comprising:

      receiving a second data packet from the second wireless device of the group;
      measuring a second RSRP associated with the second wireless device; and
      determining to not transmit NACK feedback for the second data packet responsive to the second RSRP being less than a second RSRP threshold and responsive to failure decoding the second data packet;
      wherein the first and second RSRP thresholds are different.

13. The first wireless device (1100) of Claim 12, wherein the wireless device is further adapted to perform operations according to any of Claims 2-11.

14. A computer program product comprising instructions which, when the program is executed by a computer, cause the computer to perform the method according to any one of Claims 1-11.


**Patentansprüche**

1. Verfahren zum Betreiben einer ersten drahtlosen Vorrichtung (1100), die einer Gruppe zugeordnet ist, die eine erste drahtlose Vorrichtung und eine zweite drahtlose Vorrichtung einschließt, das Verfahren umfassend:

   Empfangen (403, 503) eines ersten Datenpakets von der zweiten drahtlosen Vorrichtung der Gruppe;
   Messen (407, 507) einer ersten Referenz Signal Received Power, RSRP, basierend auf einem Referenzsignal, das von der zweiten drahtlosen Vorrichtung der Gruppe empfangen wird;
   Bestimmen (419, 515/517, 515/537), ob Bestätigungs-/negatives Feedback, ACK/NACK-Feedback, für das erste Datenpaket übermittelt werden soll oder nicht, basierend auf einem Vergleich zwischen der ersten RSRP und einem ersten RSRP-Schwellenwert; wobei das Bestimmen das Bestimmen umfasst, kein ACK-Feedback zu übermitteln, als Reaktion darauf, dass die erste RSRP größer als der erste RSRP-Schwellenwert ist, und als Reaktion auf ein erfolgreiches Dekodieren des ersten Datenpakets;

das Verfahren ferner umfassend:

Empfangen (503) eines zweiten Datenpakets von der zweiten drahtlosen Vorrichtung der Gruppe;
Messen (507) einer zweiten RSRP, die der zweiten drahtlosen Vorrichtung zugeordnet ist; und
Bestimmen (515/517), kein NACK-Feedback für das zweite Datenpaket zu übermitteln, als Reaktion darauf, dass die zweite RSRP kleiner als ein zweiter RSRP-Schwellenwert ist und als Reaktion auf das fehlgeschlagene Dekodieren des zweiten Datenpakets;
wobei der erste und der zweite RSRP-Schwellenwert unterschiedlich sind.

2. Verfahren nach Anspruch 1, wobei das Bestimmen das Bestimmen umfasst, ein ACK/NACK-Feedback zu übermitteln, als Reaktion darauf, dass die erste RSRP kleiner als der erste RSRP-Schwellenwert ist oder als Reaktion darauf, dass ein Abstand zwischen der ersten und der zweiten drahtlosen Vorrichtung größer als ein Abstandsschwellenwert ist, und/oder wobei das Bestimmen das Bestimmen umfasst, kein ACK/NACK-Feedback zu übermitteln, als Reaktion darauf, dass die erste RSRP größer als der erste RSRP-Schwellenwert ist und als Reaktion darauf, dass ein Abstand zwischen der ersten und der zweiten drahtlosen Vorrichtung kleiner als der Abstandsschwellenwert ist.

3. Verfahren nach Anspruch 2, wobei die erste RSRP kleiner als der erste RSRP-Schwellenwert ist, wobei das Bestimmen das Bestimmen umfasst, ein ACK/NACK-Feedback zu übermitteln, basierend darauf, dass die erste RSRP kleiner als der erste RSRP-Schwellenwert ist, das Verfahren ferner umfassend:
Übermitteln (427, 435) des ACK/NACK-Feedbacks für das erste Datenpaket, basierend auf einem Ergebnis des Dekodierens des ersten Datenpakets.

4. Verfahren nach Anspruch 1, wobei das Bestimmen das Bestimmen umfasst, ein ACK/NACK-Feedback zu übermitteln, als Reaktion darauf, dass die erste RSRP größer als der erste RSRP-Schwellenwert ist oder als Reaktion darauf, dass ein Abstand zwischen der ersten und der zweiten drahtlosen Vorrichtung kleiner als ein Abstandsschwellenwert ist, und/oder wobei das Bestimmen das Bestimmen umfasst, kein ACK/NACK-Feedback zu übermitteln, als Reaktion darauf, dass die erste RSRP kleiner als der erste RSRP-Schwellenwert ist und als Reaktion darauf, dass ein Abstand zwischen der ersten und der zweiten drahtlosen Vorrichtung größer als der Abstandsschwellenwert ist.

5. Verfahren nach einem der Ansprüche 2 oder 4, wobei der Abstandsschwellenwert basierend auf einer Kommunikationsreichweitenanforderung des ersten Datenpakets bestimmt wird.

6. Verfahren nach einem der Ansprüche 2, 4 oder 5, wobei der Abstandsschwellenwert auf einer Konfiguration basiert, die von einem Funkzugangsnetz empfangen wird.

7. Verfahren nach einem der Ansprüche 2, 4, 5 oder 6, wobei der Abstand zwischen der ersten und der zweiten drahtlosen Vorrichtung basierend auf Informationen eines Global Positioning System, GPS-Informationen, für die erste drahtlose Vorrichtung, basierend auf GPS-Informationen, die von der zweiten drahtlosen Vorrichtung empfangen werden, basierend auf einer Bereichskennung für die erste drahtlose Vorrichtung, die durch ein Funkzugangsnetz zugewiesen wird, und/oder basierend auf einer Bereichskennung für die zweite drahtlose Vorrichtung, die von der zweiten drahtlosen Vorrichtung empfangen wird, abgeleitet wird.

8. Verfahren nach einem der Ansprüche 1 bis 7, wobei der erste RSRP-Schwellenwert basierend auf einer Konfiguration bestimmt wird, die von einem Funkzugangsnetz empfangen wird.

9. Verfahren nach einem der Ansprüche 1 bis 8, wobei das Messen der ersten RSRP das Messen der ersten RSRP unter Verwendung von mindestens einem von einem Demodulationsreferenzsignal, DMRS, einem Sounding Reference Signal, SRS und/oder einem Channel State Information Reference Signal, CSI-RS, umfasst.

10. Verfahren nach einem der Ansprüche 1 bis 9, wobei der erste RSRP-Schwellenwert an der ersten drahtlosen Vorrichtung bestimmt wird, basierend auf eines oder mehreren von

einer bekannten Übermittlungsleistung, die durch die zweite drahtlose Vorrichtung verwendet wird, um das Referenzsignal zu übermitteln;

einer Schätzung der Übermittlungsleistung, die durch die zweite drahtlose Vorrichtung verwendet wird, um das Referenzsignal zu übermitteln; und mindestens eines von einem Quality-of-Service-Parameters, QoS-Parameter, der der Gruppe zugeordnet ist; und

einer Kommunikationsreichweitenanforderung eines Diensts, der der Gruppe zugeordnet ist, und/oder einem Kanalüberlastungspegel.

**11.** Verfahren nach einem der Ansprüche 1 bis 10, wobei die erste drahtlose Vorrichtung eine erste drahtlose Vehicle-to-Vehicle-Vorrichtung, V2X-Vorrichtung, ist, und wobei die zweite drahtlose Vorrichtung eine zweite drahtlose V2X-Vorrichtung ist.

**12.** Erste drahtlose Vorrichtung (1100), wobei die drahtlose Vorrichtung angepasst ist, zum:

Empfangen eines ersten Datenpakets von einer zweiten drahtlosen Vorrichtung einer Gruppe, wobei die Gruppe die erste drahtlose Vorrichtung und die zweite drahtlose Vorrichtung einschließt;

Messen einer ersten Reference Signal Received Power, RSRP, basierend auf einem Referenzsignal, das von der zweiten drahtlosen Vorrichtung der Gruppe empfangen wird;

Bestimmen, ob Bestätigungs-/negatives Feedback, ACK/NACK-Feedback, für das erste Datenpaket übermittelt werden soll oder nicht, basierend auf einem Vergleich zwischen der ersten RSRP und einem ersten RSRP-Schwellenwert;

wobei das Bestimmen das Bestimmen umfasst, kein ACK-Feedback zu übermitteln, als Reaktion darauf, dass die erste RSRP größer als der erste RSRP-Schwellenwert ist, und als Reaktion auf das erfolgreiche Dekodieren des ersten Datenpakets;

das Verfahren ferner umfassend:

Empfangen eines zweiten Datenpakets von der zweiten drahtlosen Vorrichtung der Gruppe;

Messen einer zweiten RSRP, die der zweiten drahtlosen Vorrichtung zugeordnet ist; und

Bestimmen, kein NACK-Feedback für das zweite Datenpaket zu übermitteln, als Reaktion darauf, dass die zweite RSRP kleiner als ein zweiter RSRP-Schwellenwert ist und als Reaktion auf das fehlgeschlagene Dekodieren des zweiten Datenpakets;

wobei der erste und der zweite RSRP-Schwellenwert unterschiedlich sind.

**13.** Erste drahtlose Vorrichtung (1100) nach Anspruch 12, wobei die drahtlose Vorrichtung ferner angepasst ist, um Betriebe nach einem der Ansprüche 2 bis 11 durchzuführen.

**14.** Computerprogrammprodukt, umfassend Anweisungen, die, wenn das Programm durch einen Computer ausgeführt wird, den Computer veranlassen, das Verfahren nach einem der Ansprüche 1 bis 11 durchzuführen.

**Revendications**

**1.** Procédé de fonctionnement d'un premier dispositif sans fil (1100) associé à un groupe comportant le premier dispositif sans fil et un second dispositif sans fil, le procédé comprenant :

la réception (403, 503) d'un premier paquet de données provenant du second dispositif sans fil du groupe ;

la mesure (407, 507) d'une première puissance reçue de signal de référence, RSRP, sur la base d'un signal de référence reçu à partir du second dispositif sans fil du groupe ;

la détermination (419, 515/517, 515/537) du fait qu'il faut ou non transmettre un feedback d'accusé de réception/négatif, ACK/NACK, pour le premier paquet de données sur la base d'une comparaison entre la première RSRP et un premier seuil de RSRP ; la détermination comprenant la détermination du fait de ne pas transmettre de feedback ACK en réponse au fait que la première RSRP est supérieure au premier seuil de RSRP et en réponse à un décodage réussi du premier paquet de données ;

le procédé comprenant en outre :

la réception (503) d'un second paquet de données provenant du second dispositif sans fil du groupe ;

la mesure (507) d'une seconde RSRP associée au second dispositif sans fil ; et

la détermination (515/517) de ne pas transmettre de feedback NACK pour le second paquet de données en réponse au fait que la seconde RSRP est inférieure à un second seuil de RSRP et en réponse à une défaillance de décodage du second paquet de données ;

dans lequel les premier et second seuils de RSRP sont différents.

2. Procédé selon la revendication 1, dans lequel la détermination comprend la détermination du fait de transmettre un feedback ACK/NACK en réponse au fait que la première RSRP est inférieure au premier seuil de RSRP ou en réponse au fait qu'une distance entre les premier et second dispositifs sans fil est supérieure à un seuil de distance et/ou dans lequel la détermination comprend la détermination du fait de ne pas transmettre de feedback ACK/NACK en réponse au fait que la première RSRP est supérieure au premier seuil de RSRP et en réponse au fait qu'une distance entre les premier et second dispositifs sans fil est inférieure au seuil de distance.

3. Procédé selon la revendication 2, dans lequel la première RSRP est inférieure au premier seuil de RSRP, dans lequel la détermination comprend la détermination du fait de transmettre un feedback ACK/NACK sur la base du fait que la première RSRP est inférieure au premier seuil de RSRP, le procédé comprenant en outre :
la transmission (427, 435) d'un feedback ACK/NACK pour le premier paquet de données sur la base d'un résultat de décodage du premier paquet de données.

4. Procédé selon la revendication 1, dans lequel la détermination comprend la détermination du fait de transmettre un feedback ACK/NACK en réponse au fait que la première RSRP est supérieure au premier seuil de RSRP ou en réponse au fait qu'une distance entre les premier et second dispositifs sans fil est inférieure à un seuil de distance et/ou dans lequel la détermination comprend la détermination du fait de ne pas transmettre de feedback ACK/NACK en réponse au fait que la première RSRP est inférieure au premier seuil de RSRP et en réponse au fait qu'une distance entre les premier et second dispositifs sans fil est supérieure au seuil de distance.

5. Procédé selon l'une quelconque des revendications 2 ou 4, dans lequel le seuil de distance est déterminé sur la base d'une exigence de plage de communication du premier paquet de données.

6. Procédé selon l'une quelconque des revendications 2, 4 ou 5, dans lequel le seuil de distance est basé sur une configuration reçue à partir d'un réseau d'accès radio.

7. Procédé selon l'une quelconque des revendications 2, 4, 5, ou 6, dans lequel la distance entre les premier et second dispositifs sans fil est dérivée sur la base d'informations d'un système de positionnement global, GPS, pour le premier dispositif sans fil, sur la base d'informations GPS reçues à partir du second dispositif sans fil, sur la base d'un identifiant de zone pour le premier dispositif sans fil attribué par un réseau d'accès radio et/ou sur la base d'un identifiant de zone pour le second dispositif sans fil reçu à partir du second dispositif sans fil.

8. Procédé selon l'une quelconque des revendications 1 à 7, dans lequel le premier seuil de RSRP est déterminé sur la base d'une configuration reçue à partir d'un réseau d'accès radio.

9. Procédé selon l'une quelconque des revendications 1 à 8, dans lequel la mesure de la première RSRP comprend la mesure de la première RSRP à l'aide d'au moins l'un parmi un signal de référence de démodulation, DMRS, un signal de référence de sondage, SRS, et/ou un signal de référence d'informations d'état de canal, CSI-RS.

10. Procédé selon l'une quelconque des revendications 1 à 9, dans lequel le premier seuil de RSRP est déterminé au niveau du premier dispositif sans fil sur la base d'un ou de plusieurs éléments parmi une puissance de transmission connue utilisée par le second dispositif sans fil pour transmettre le signal de référence ;

une estimation de puissance de transmission utilisée par le second dispositif sans fil pour transmettre le signal de référence ; et d'au moins un élément parmi un paramètre de qualité de service, QoS, associé au groupe ; et une exigence de plage de communication d'un service associé au groupe et/ou un niveau d'encombrement de canal.

11. Procédé selon l'une quelconque des revendications 1 à 10, dans lequel le premier dispositif sans fil est un premier dispositif sans fil de véhicule à véhicule, V2X, et dans lequel le second dispositif sans fil est un second dispositif sans fil V2X.

12. Premier dispositif sans fil (1100) dans lequel le dispositif sans fil est conçu pour :

recevoir un premier paquet de données provenant d'un second dispositif sans fil d'un groupe, le groupe comportant le premier dispositif sans fil et le second dispositif sans fil ;

mesurer une première puissance reçue de signal de référence, RSRP, sur la base d'un signal de référence reçu à partir du second dispositif sans fil du groupe ;

déterminer s'il faut ou non transmettre un feedback d'accusé de réception/négatif, ACK/NACK, pour le premier paquet de données sur la base d'une comparaison entre la première RSRP et un premier seuil de RSRP ;

dans lequel la détermination comprend la détermination du fait de ne pas transmettre de feedback ACK en réponse au fait que la première RSRP est supérieure au premier seuil de RSRP et en réponse à un décodage réussi du premier paquet de données ;

le procédé comprenant en outre :

la réception d'un second paquet de données à partir du second dispositif sans fil du groupe ;

la mesure d'une seconde RSRP associée au second dispositif sans fil ; et

la détermination du fait de ne pas transmettre de feedback NACK pour le second paquet de données en réponse au fait que la seconde RSRP est inférieure à un second seuil de RSRP et en réponse à une défaillance de décodage du second paquet de données ;

dans lequel les premier et second seuils de RSRP sont différents.

13. Premier dispositif sans fil (1100) selon la revendication 12, dans lequel le dispositif sans fil est en outre conçu pour mettre en oeuvre des opérations selon l'une quelconque des revendications 2 à 11.

14. Produit de programme informatique comprenant des instructions qui, lorsque le programme est exécuté par un ordinateur, amènent l'ordinateur à exécuter le procédé selon l'une quelconque des revendications 1 à 11.

Figure 1

## Figure 2

1100

1107

Transceiver
1101

Device Processor
1103

Memory
1105

1200

## Figure 3

Network Node
(eNodeB or eNB)

Transceiver
1201

Network Interface
1207

Processor
1203

Memory
1205

## Figure 4

```
                          ┌─────────────────┐
                          │      Begin       │
                          └────────┬────────┘
                                   │
         No          ╱─────────────────────────╲
    ◄───────────────┤   Groupcast              │
                    │   Data Packet ?          │
                     ╲         401             ╱
                          └────────┬────────┘
                                   │ Yes
                          ┌─────────────────┐
                          │ Receive Data Packet │
                          │       403        │
                          └────────┬────────┘
                                   │
                          ┌─────────────────┐
                          │   Measure RSRP   │
                          │       407        │
                          └────────┬────────┘
                                   │
                          ┌─────────────────┐
                          │ Compare RSRP and RSRP │
                          │     threshold    │
                          │       411        │
                          └────────┬────────┘
                                   │
                          ┌─────────────────┐
                          │ Determine Whether to │
                          │ Transmit ACK/NACK Feedback │
                          │       415        │
                          └────────┬────────┘
                                   │
       Yes          ╱─────────────────────────╲      No
    ◄───────────────┤   Transmit                │───────────►
                    │   ACK/NACK Feedback ?     │
                     ╲        419              ╱
```

Transmit ACK/NACK Feedback ? 419

Success Decoding ? 423

Transmit ACK Feedback 427

Transmit NACK Feedback 435

Success Decoding ? 441

Process Data Packet 431

## Figure 5

```
                    ( Begin )
                        │
                        ▼
              ┌───────────────────┐
      No      │   Groupcast       │
  ◄───────────│  Data Packet ?    │
              │      501          │
              └───────────────────┘
                        │ Yes
                        ▼
              ┌───────────────────┐
              │ Receive Data Packet│
              │       503         │
              └───────────────────┘
                        │
                        ▼
              ┌───────────────────┐
              │   Measure RSRP    │
              │       507         │
              └───────────────────┘
                        │
                        ▼
              ┌───────────────────┐
              │ Compare RSRP and RSRP│
              │     threshold     │
              │       511         │
              └───────────────────┘
                        │
  Greater               ▼               Less
  Than (>)   ┌───────────────────┐     Than (<)
  ◄──────────│   RSRP > or <     │──────────►
             │  RSRP Threshold ? │
             │       515         │
             └───────────────────┘
       │                                    │
       ▼                                    ▼
  ┌──────────────┐    Yes        ┌──────────────────┐   No
  │Success Decoding?│────────────│ Success Decoding ?│──────►
  │     517      │               │      537         │
  └──────────────┘               └──────────────────┘
       │ No                              │ Yes
       ▼                                 ▼
 ┌──────────────────┐          ┌──────────────────┐
 │Transmit NACK Feedback│      │Transmit ACK Feedback│
 │       519        │          │       539        │
 └──────────────────┘          └──────────────────┘
       │                                 │
       │                                 ▼
       │                       ┌──────────────────┐
       │                       │ Process Data Packet│
       │                       │       541        │
       │                       └──────────────────┘
       ▼                                 ▼
```

## Figure 6

| PSCCH | PSCCH |
|---|---|
| PSSCH<br>(if present) | PSSCH<br>(CSI report) |

## Figure 7

| | |
|---|---|
| | PSCCH-I |
| | PSSCH<br>(CSI report) |
| PSCCH-I | |
| PSSCH<br>(if present) | |

Figure 8

| PSCCH |
| :---: |
| SCSI-RS |
| PSSCH |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- QoS for NR V2X. *R2-1905196,* 08 April 2019
- Physical layer procedures for side link. *R1-1905012,* 08 April 2019
- On the use of communication range at access stratum. *R2-1904711,* 08 April 2019
- SC-PTM feedback scheme for link adaptation and retransmission. *R2-166852,* 10 October 2016
- A Reliable Groupcast HARQ feedback scheme for NR V2X. *R1-I902132,* 25 February 2019
- Discussion on NR V2X Sidelink Physical Procedures. *R1-1905079,* 08 April 2019
- New WID on 5G V2X with NR sidelink. *RP-190766,* March 2019